(19) Europäisches Patentamt
European Patent Office
Office européen des brevets

(11) **EP 3 760 045 A1**

(12) **EUROPEAN PATENT APPLICATION**

(43) Date of publication:
06.01.2021 Bulletin 2021/01

(51) Int Cl.:
*A01N 43/90* (2006.01)  *A01N 47/34* (2006.01)
*A01N 53/00* (2006.01)  *A01P 7/02* (2006.01)

(21) Application number: 19184532.0

(22) Date of filing: 04.07.2019

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Laboratorios Virbac Mexico SA DE CV 45010 Zapopan, Jalisco (MX)**

(72) Inventors:
• **MONROY, José Manuel Moreno**
  **Zapopan, Jalisco 45050 (MX)**
• **PÁRRAGA, Luis Gerardo Estrella**
  **Tonalá, Jalisco 45429 (MX)**
• **RINCÓN, Gonzalo López**
  **Zapopan, Jalisco 45130 (MX)**

(74) Representative: **Gevers & Orès**
  **Immeuble le Palatin 2**
  **3 Cours du Triangle**
  **CS 80165**
  **92939 Paris La Défense Cedex (FR)**

(54) **TOPICAL COMPOSITION AGAINST RHIPICEPHALUS (BOOPHILUS) MICROPLUS**

(57) The invention disclosed in the application deals with a topical composition comprising eprinomectin, diflubenzuron and optionally a third acaricide, such as flumethrin, and its use for controlling cattle tick *Rhipicephalus* (*Boophilus*) *microplus.*

EP 3 760 045 A1

**Description**

Ticks and tick borne diseases are of global importance because of their economic and health implications in livestock.

Ticks and tick borne diseases affect 80 % of the world's cattle population and are widely distributed throughout the world, particularly in the tropical and subtropical regions such as Latin America, Africa or Australia.

Cattle ticks, also called *Rhipicephalus* (*Boophilus*) *microplus* are responsible for severe economic losses in both dairy and beef cattle either directly by weakening the animals (blood draining, injection of toxins) or indirectly because of the morbidity and mortality associated with the diseases they transmit such as bovine babesiosis, bovine anaplasmosis and spirochetosis.

Current tick control strategy includes both prevention and cure. Chemical control has been the main strategy to overcome tick infestations, but cost associated with treatment is considerable. Price of chemicals is not only the factor; there is also involvement of a most important concern: tick resistance which is more and more often reported. For example, populations of cattle tick, *Rhipicephalus* (*Boophilus*) *microplus,* resistant to organophosphates, synthetic pyrethroids (such as deltamethrin), amitraz, fipronil and macrocyclic lactones such as ivermectins have been reported in Mexico, Brazil or India.

To overcome the phenomenon of tick resistance, strategies involving rotation of acaricides, rational use of acaricides and association of acaricides have been proposed.

Macrocyclic lactones are broad-spectrum antiparasitic drugs widely used to control endoparasites and ectoparasites. The efficacy of ivermectin, doramectin and moxidectin for the control of *Rhipicephalus* (*Boophilus*) *microplus* populations has been demonstrated. Among macrocyclic lactones, eprinomectin is used against endo and ectoparasites without withdrawal time in milk and meat after its pour-on administration at 0.5 mg/kg. Its efficacy for controlling *Rhipicephalus* (*Boophilus*) *microplus* has been reported as early as 2002.

Fluazuron is currently the only tick development inhibitor in the market. It is available as a pour-on, either alone or in mixtures (e.g. with ivermectin). Fluazuron is highly specific for ticks, and has no efficacy against other cattle parasites, neither external (e.g. mites, lice or insects) nor whatever internal parasites. Fluazuron does not kill ticks directly, but inhibits molting during development. Affected eggs will not hatch, larvae will die during their molt to nymphs, and nymphs will die during their molt to adults. Pour-ons based on Fluazuron alone (Acatak®) or in combination with ivermectin (Acatak Duostar®) are currently sold in Latin America by the company Elanco.

In spite of its efficacy, the major drawback of fluazuron is that it is not approved for dairy cattle and the withdrawal time for meat cattle is at least 42 days. With the exception of fluazuron, other benzoylphenylureas have only been seldom used against cattle ticks due to their known lack of efficiency against this species. Recent investigations with orally administered diflubenzuron have been carried out but no definitive conclusions regarding the efficacy of diflubenzuron could be drawn.

On the other hand, resistance to synthetic pyrethroids is often very high (resistance factor of up to 1000 and beyond), which makes whatever product with a synthetic pyrethroid completely useless, even undiluted. Such products may still provide some control but not complete and with no residual effect. Atypical example is Bayticol®, a flumethrin (1%) based pour-on for cattle whose efficacy has been largely reduced over years.

There is therefore a need for compositions having efficacy against *Rhipicephalus* (*Boophilus*) *microplus,* capable of overcoming the problems of resistance to acaricides.

An object of the present invention is a composition having activity against *Rhipicephalus* (*Boophilus*) *microplus.* Another object of the present invention is a composition having activity against *Rhipicephalus* (*Boophilus*) *microplus* useable in dairy cows and having substantially no withdrawal time in beef cattle.

In a first embodiment, the present invention provides a topical composition comprising eprinomectin and diflubenzuron.

In the topical composition according to the present invention, eprinomectin is present in amounts comprised between 0.01 % and 2 %, preferably between 0.1 and 1 % on a weight to volume basis.

More preferably, the pour-on contains about 0.5 % of eprinomectin on a weight to volume basis.

In the topical composition according to the present invention, diflubenzuron is present in amounts comprised between 1 % and 10 %, preferably between 3 and 7 % on a weight to volume basis.

More preferably, the pour-on contains about 5 % of diflubenzuron.

The present invention concerns preferably a topical composition in the form of a pour-on comprising between 0.01 % and 2 %, preferably between 0.1 and 1 % on a weight to volume basis of eprinomectin and between 1 % and 10 %, preferably between 3 and 7 % on a weight to volume basis of diflubenzuron. A particular pour-on according to the present invention contains about 0.5 % of eprinomectin and about 5 % of diflubenzuron on a weight to volume basis.

In one aspect, the topical composition according to the present invention contains eprinomectin and diflubenzuron as the sole acaridical active principles, preferably in the amounts described above.

In another aspect, the topical composition according to the present invention comprises further acaricidal active principles. Examples of acaricidal active principles include phenylpyrazoles such as fipronil, isoxazolines such as sarolaner, fluralaner, afoxolaner or lotilaner, pyrethroids, in particular synthetic pyrethroids such as cypermethrin, deltamethrin, flumethrin and permethrin.

Advantageously, the topical composition according the invention further comprises a synthetic pyrethroid, preferably selected from cypermethrin, deltamethrin, flumethrin and permethrin. The pyrethroid is preferably present in the topical composition in amounts between 0.01 and 5 %, preferably between 0.5 and 1.5 %, more preferably in amounts of about 1 % on a weight to volume basis.

In a second embodiment, the present invention concerns a topical composition as described in the first embodiment further comprising flumethrin.

It has been found that the addition of flumethrin to the two other active principles results in a topical formulation having a longer effect than the same formulation containing only eprinomectin and diflubenzuron.

In this embodiment, the topical composition comprises between 0.01 and 5 %, preferably between 0.5 and 1.5 % of flumethrin on a weight to volume basis. Preferably, the topical composition comprises about 1 % of flumethrin on a weight to volume basis.

In a particular aspect, the topical composition is a pour-on comprising:

- between 0.01 % and 2 %, preferably between 0.1 and 1 %, more preferably about 0.5 %, of eprinomectin on a weight to volume basis,
- between 1 % and 10 %, preferably between 3 and 7 %, more preferably about 5 %, of diflubenzuron on a weight to volume basis, and
- between 0.01 and 5 %, preferably between 0.5 and 1.5 %, more preferably about 1 %, of flumethrin on a weight to volume basis.

In one aspect, the topical composition according to the present invention contains eprinomectin, diflubenzuron and flumethrin as the sole acaridical active principles, preferably in the amounts described above.

Conventional formulations useful for the topical delivery of the acaricide treatment include emulsifiable concentrate, wettable powder or flowable products that could be diluted in water and applied to cattle by a hand sprayer, spray race, through immersion of animals in a dipping vat, spot on formulations and pour-on formulation. Preferably, the composition according to the present invention is a pour-on.

The pour-on may be in the form of a suspension, emulsifiable concentrate or solution.

The pour-on formulations according to the present invention typically contain the active principles dissolved or dispersed in a carrier (or vehicle). They are typically applied to the exterior of the animal to be treated as a line or a spot. The formulation then migrates over the surface of the animal to protect its whole external surface area.

The carrier or vehicle present in such pour-on formulations is formulated to achieve good spread around the skin and/or penetration of the epidermis of the animal.

The pour-on according to the present invention comprises, in addition to the actives, a solvent or a mixture of solvents as the carrier.

The solvent or mixture of solvents may be selected from pyrrolidones, such as N-methyl-2-pyrrolidone, 2-pyrrolidone, N, 5-dimethyl-2-pyrrolidone, 3,3-dimethyl-2-pyrrolidone, N-ethyl-2-pyrrolidone, N-ethoxy-2-pyrrolidone, N-ethylene-2-pyrrolidone, 1-pyrrolidone, or any combinations thereof; glycols such as propylene glycol; polyethylene glycols such as PEG 200, PEG 300, PEG 400; glycol ethers such as diethylene glycol ethyl ether, isopropylidene glycerol and diethylene glycol monobutyl ether (DGME); benzyl benzoate; alcohols such as isopropyl alcohol, pentanol (including 1-, 2- and 3-pentanol); aromatic solvents such as xylenes; paraffins; isoparaffins; acetamides, such as dimethyl acetamide; glycerol formal; triacetin; dimethyl isosorbide; carbonates such as propylene carbonate; glycerol; acetone; methylethylketone (MEK); dimethylsulfoxide (DMSO); dimethylformamide, N,N-diethyl-m-toluamide; tetrahydrofuran; caprolactam; decylmethylsulfoxide; solketal; ethyl lactate and mixtures thereof. Other solvents will be apparent to the one skilled in the art.

The carrier may include water or not.

In one embodiment, the carrier comprises a mixture of a pyrrolidone and an acetamide. Preferably, the carrier comprises a mixture of N-methyl-pyrrolidone and N,N-dimethyl acetamide.

The pour-on may comprise further optional ingredients such as stabilizers, (antioxidants), spreading agents, preservatives, adhesion promoters, active solubilizers such as oleic acid, viscosity modifiers, UV blockers or absorbers, colorants, surface active agents, including anionic, cationic, non-ionic and ampholytic surface active agents; penetration enhancers,

Spreading agents may include, but are not limited to, caprylic acids, caprylic esters, mixtures of caprylic acids and esters, ethyl oleate, propylene glycol, vegetable oils such as Arachid oil (peanut oil), olive oil, corn oil, coprah oil or any combinations thereof.

The spreading agent may also comprise a polymer. In addition to their spreading capability, polymers help keeping the actives on the skin for a longer period and help preventing the actives to be washed away or to precipitate during rain. Suitable polymers may be selected from the group consisting in polyvinylpyrrolidone, polyvinyl alcohol, methyl cellulose, ethyl cellulose, carboxymethyl cellulose, hydroxyethyl cellulose, hydrolyzed wheat protein, hydrolyzed animal protein, gelatin derivatives, collagen derivatives, acrylates/t-Octylpropenamide copolymer and cationic quatenary amine salts or mixtures thereof.

Stabilizers that may be used in the formulation of the present invention include, but are not limited to, vitamin B-12, vitamin E acetate, niacinamide, ascorbic acid, butylated hydroxyaniline (BHA), sorbic acid, butylated hydroxytoluene (BHT), or any combinations thereof.

Suitable penetration enhancers may be selected from the group comprising propylene glycol dicaprylate/dicaprate, cetearyl ethylhexanoate, isopropyl myristate, azones, fatty acids and alcohols, terpenes, terpenoids, oxazolidinones, butyl stearate, $C_{12}$-$C_{15}$ alkyl benzoate, cetyl palmitate, di- isopropyl adipate, di-ethylhexyl adipate, caprylic/capric triglyceride, isocetyl stearate, isopropyl palmitate, lauryl lactate, myristyl myristate, ethylhexyl cocoate, ethylhexyl hydroxystearate, ethylhexyl palmitate, ethylhexyl pelargonate, ethylhexyl stearate, di-ethylhexyl succinate, PPG, 2 myristyl ether propionate, pentaerythrityl tetraisostearate, pentaerythrityl tetracaprylate, pentaerythrityl tetracaprate, cetyl esters, isotridecyl isononanoate, stearyl heptanoate, steryl caprylate or mixtures thereof.

In one embodiment, the pour-on contains:

- between 1.01 and 17% of eprinomectin, diflubenzuron and, when present, flumethrin on a weight to volume basis,
- between 20 and 70% or N-methyl-pyrrolidinone on a weight to volume basis, and
- between 10 and 30% of N,N-dimethyl acetamide on a weight to volume basis,
- optionally a stabilizer, preferably selected from the group consisting of BHA or BHT,
- optionally a spreading agent, preferably propylene glycol dicaprylate/dicaprate.

In a preferred aspect in which the actives principles are eprinomectin and diflubenzuron, the pour-on contains:

- between 0.01 % and 2 %, preferably between 0.1 and 1 %, more preferably about 0.5 %, of eprinomectin on a weight to volume basis,
- between 1 % and 10 %, preferably between 3 and 7 %, more preferably about 5 %, of diflubenzuron on a weight to volume basis,
- between 40 and 60 %, preferably about 50 %, of N-methyl-pyrrolidinone on a weight to volume basis,
- between 10 and 30 %, preferably about 20 %, of N,N-dimethyl acetamide on a weight to volume basis,
- about 0,1 % of BHT, on a weight to volume basis.
- between 20 and 30 %, preferably about 25 % of propylene glycol dicaprylate/dicaprate

A specific pour-on in which the actives principles are eprinomectin and diflubenzuron comprises:

- about 0.5 % of eprinomectin on a weight to volume basis,
- about 5 % of diflubenzuron on a weight to volume basis,
- about 50 % of N-methyl-pyrrolidinone on a weight to volume basis,
- about 20 % of N,N-dimethyl acetamide on a weight to volume basis,
- about 0,1 % of BHT, on a weight to volume basis,
- about 24,4 % of propylene glycol dicaprylate/dicaprate.

In a preferred aspect in which the active principles are eprinomectin, diflubenzuron and flumethrin , the pour-on contains:

- between 0.01 % and 2 %, preferably between 0.1 and 1 %, more preferably about 0.5 %, of eprinomectin on a weight to volume basis,
- between 1 % and 10 %, preferably between 3 and 7 %, more preferably about 5 %, of diflubenzuron on a weight to volume basis,
- between 0.01 and 5 %, preferably between 0.5 and 1.5 %, more preferably about 1 %, of flumethrin on a weight to volume basis,
- between 40 and 60 %, preferably about 50 %, of N-methyl-pyrrolidinone on a weight to volume basis,
- between 10 and 30 %, preferably about 20 %, of N,N-dimethyl acetamide on a weight to volume basis,
- about 0,1 % of BHT, on a weight to volume basis.
- between 20 and 30 %, preferably about 25 % of propylene glycol dicaprylate/dicaprate.

A specific pour-on in which the actives principles are eprinomectin, diflubenzuron and flumethrin comprises:

- about 0.5 % of eprinomectin on a weight to volume basis,
- about 5 % of diflubenzuron on a weight to volume basis,
- about 1% of flumethrin on a weight basis volume,
- about 50 % of N-methyl-pyrrolidinone on a weight to volume basis,
- about 20 % of N,N-dimethyl acetamide on a weight to volume basis,
- about 0,1 % of BHT, on a weight to volume basis,
- about 23,4 % of propylene glycol dicaprylate/dicaprate.

The compositions according to the present invention have been showed to be effective for controlling cattle tick (*Rhipicephalus* (*Boophilus*) *microplus*) in food producing animals, such as dairy cattle or beef cattle.

In a third embodiment, the present invention therefore concerns a method for controlling cattle tick (*Rhipicephalus* (*Boophilus*) *microplus*), comprising topically administering a topical composition as defined in the first or in the second embodiment, in particular in food producing animals such as dairy cattle or beef cattle.

In one aspect, the present invention concerns a method for reducing or inhibiting repletion of cattle tick (*Rhipicephalus* (*Boophilus*) *microplus*) comprising topically administering a topical composition as defined in the first or in the second embodiment, in particular in food producing animals such as dairy cattle or beef cattle.

In a second aspect, the present invention concerns a method for reducing or inhibiting oviposition in female cattle tick (*Rhipicephalus* (*Boophilus*) *microplus*) comprising topically administering a topical composition as defined in the first or in the second embodiment, in particular in food producing animals such as dairy cattle or beef cattle.

In a third aspect, the present invention concerns a method for reducing or inhibiting reproductive potential of female cattle tick (*Rhipicephalus* (*Boophilus*) *microplus*) comprising topically administering a topical composition as defined in the first or in the second embodiment, in particular in food producing animals such as dairy cattle or beef cattle.

In a fourth aspect, the present invention concerns a method for reducing or inhibiting at least two, preferably three, of oviposition in female cattle tick (*Rhipicephalus* (*Boophilus*) *microplus*), reproductive potential of female cattle tick (*Rhipicephalus* (*Boophilus*) *microplus*), repletion of cattle tick (*Rhipicephalus* (*Boophilus*) *microplus*).

In a fifth aspect, the present invention concerns a method for controlling cattle tick (*Rhipicephalus* (*Boophilus*) *microplus*), comprising topically administering a topical composition as defined in the first or in the second embodiment, in particular in food producing animals such as dairy cattle or beef cattle and at least one further internal or external parasite, in particular selected from the group consisting in *Haematobia irritans, Dermatobia hominis* and helminths such as *Haemonchus placei, Cooperia pectinata, Cooperia punctata, Oesophagostomum radiatum,* and *Trichonstrongylus axei.*

The topical composition according to the present invention may be administered in doses providing from 0.1 mg to 2 mg, preferably from 0.3 to 1 mg, in particular about 0.5 mg of eprinomectin per kg of the animal to be treated; from 1 mg to 10 mg, preferably from 3 to 7 mg, in particular about 5 mg of diflubenzuron per kg of the animal to be treated and, when present in the pour-on, from 0.1 mg to 2 mg, preferably from 0.5 to 2 mg, in particular about 1 mg of flumethrin per kg of the animal to be treated.

The present invention is also understood to concern a topical composition, preferably a pour-on, as defined in the first or second embodiment for use in controlling cattle tick (*Rhipicephalus* (*Boophilus*) *microplus*) in food producing animals, such as dairy cattle or beef cattle.

The present invention is also understood to concern the use of eprinomectin and diflubenzuron, preferably in the amounts defined in the first embodiment or the use of eprinomectin, diflubenzuron and flumethrin, preferably in the amounts defined in the second embodiment for the manufacture of a medicament for controlling cattle tick (*Rhipicephalus* (*Boophilus*) *microplus*) in food producing animals, such as dairy cattle or beef cattle, the medicament being in the form suitable for topical administration, preferably as a pour-on.

**Description of the Figures**

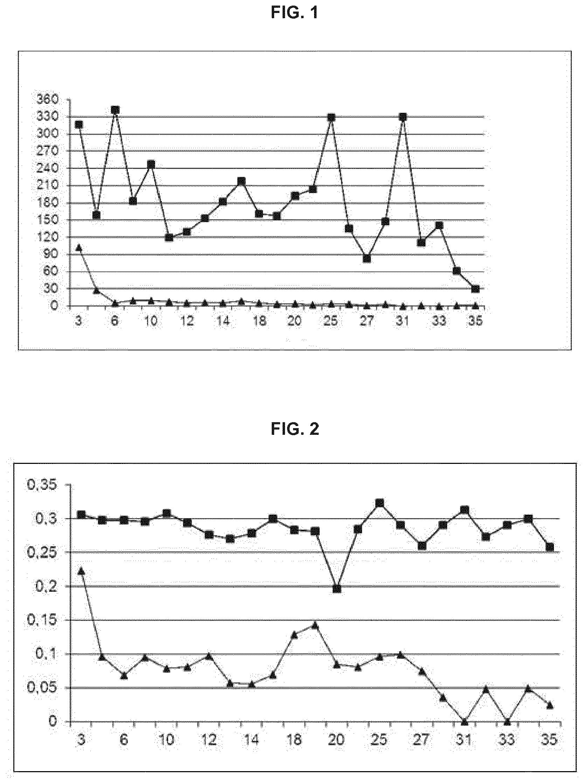

**Figure 1** depicts the average number of engorged female *Rhipicephalus* (*Boophilus*) *microplus* strain "Isla" in group treated with a pour-on containing eprinomectin, diflubenzuron and flumethrin (▲) and in the untreated control group (■). The Y-axis shows the number of females and the X-axis the time in days.

**Figure 2** depicts the average weight of engorged female *Rhipicephalus* (*Boophilus*) *microplus* strain "Isla" in group treated with a pour-on containing eprinomectin, diflubenzuron and flumethrin (▲) and in the untreated control group (■). The Y-axis shows the average weight of the females (in g) of and the X-axis the time in days.

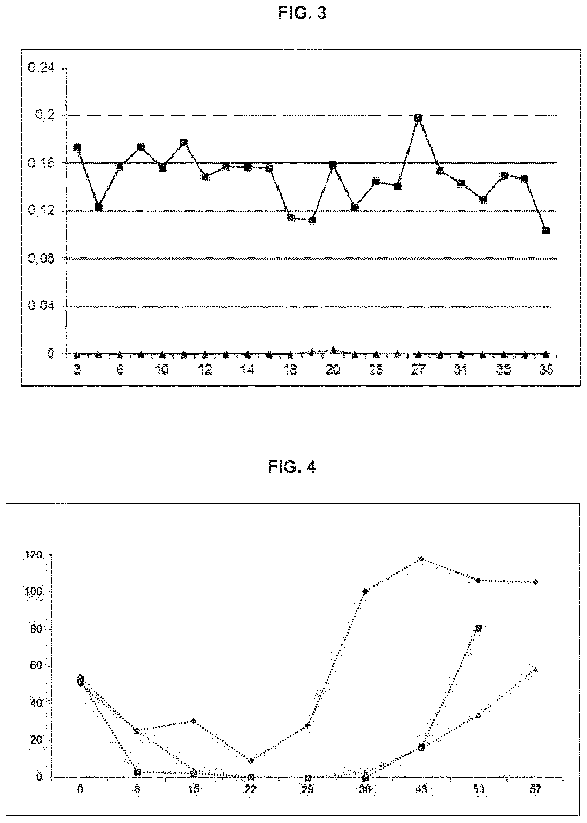

**Figure 3** depicts the average weight of the eggs of *Rhipicephalus* (*Boophilus*) *microplus* strain "Isla" in group treated with a pour-on containing eprinomectin, diflubenzuron and flumethrin (▲) and in the untreated control group (■). The Y-axis shows the average weight (in g) of the eggs and the X-axis the time in days.

**Figure 4** depicts the average number of female *Rhipicephalus* (*Boophilus*) *microplus* in group treated with a pour-on containing eprinomectin, diflubenzuron and flumethrin (■), in an untreated control group (♦) and in a group treated with 1 % fluazuron (Acatak®, ▲) The Y-axis shows the number of females and the X-axis the time post-treatment in days.

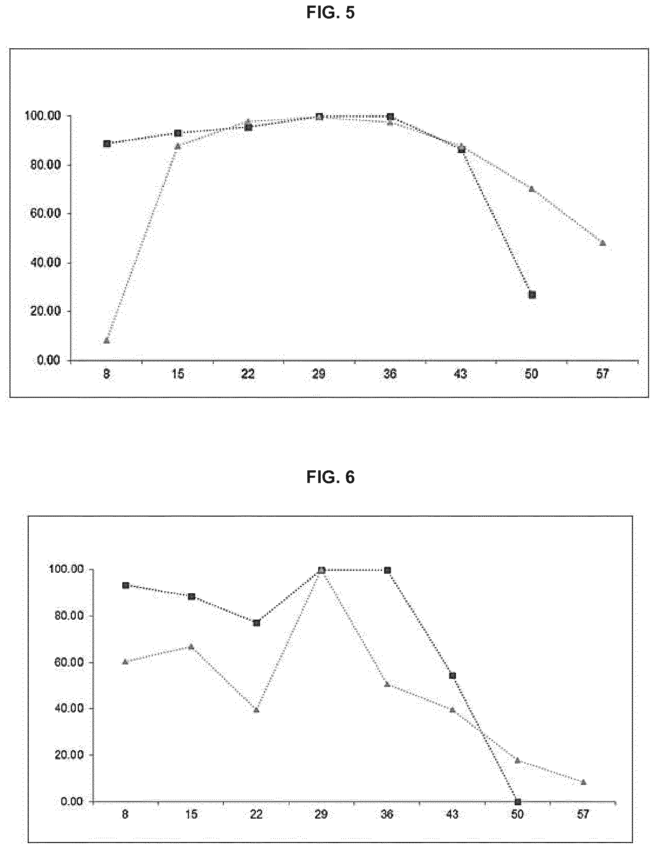

**Figure 5** depicts the percentage inhibition of repletion of *Rhipicephalus (Boophilus) microplus* in group treated with a pour-on containing eprinomectin, diflubenzuron and flumethrin (■) and in a group treated with 1 % fluazuron (Acatak®, ▲) The Y-axis shows the percentage of efficacy on repletion and the X-axis the time post-treatment in days.

**Figure 6** depicts the percentage of efficacy on inhibition of oviposition of *Rhipicephalus* (*Boophilus*) *microplus* in group treated with a pour-on containing eprinomectin, diflubenzuron and flumethrin (■) and in a group treated with 1 % fluazuron (Acatak®, ▲) The Y-axis shows the percentage of inhibition of oviposition and the X-axis the time post-treatment in days.

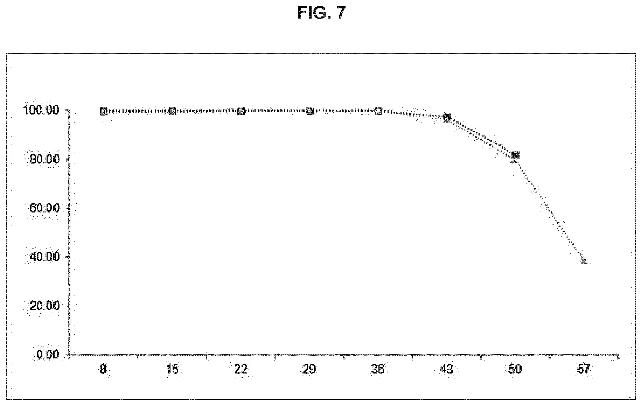

**Figure 7** depicts the percentage of inhibition of the reproductive potential of *Rhipicephalus* (*Boophilus*) *microplus* in group treated with a pour-on containing eprinomectin, diflubenzuron and flumethrin (■) and in a group treated with 1 % fluazuron (Acatak®, ▲) The Y-axis shows the percentage of inhibition of the reproductive potential and the X-axis the time post-treatment in days.

## Examples

**A. Example 1: Stable study with an eprinomectin/diflubenzuron/flumethrin pour-on.**

Biological evaluation of Ixodicide based on Eprinomectin 0.5%, Diflubenzuron 5% and Flumethrin 1% in a pour on presentation in cattle artificially infested with B *Rhipicephalus* (*Boophilus*) *microplus* by means of a stable test.

**1. Objectives of the study:**

Determine the percentages of effectiveness on *Rhipicephalus* (*Boophilus*) *microplus* ticks that reach to fill up despite the treatment, the percentages of oviposition inhibition in *Rhipicephalus* (*Boophilus*) *microplus,* the effects on the reproductive potential in adult females *Rhipicephalus* (*Boophilus*) *microplus* and weight variations in engorged female ticks after treatment.

**2. Material and methods**

Each animal was observed at least 10 minutes after the treatment and then for four hours at 1 hour intervals to identify possible adverse reactions. If after the treatment a change in the behavior of the animal had been observed on collection days, this should have been recorded by the person responsible for the animals. If no change is observed in the periods indicated (as was the case), it should also be recorded in the test logs.

For infestations, tick larvae were used: *Rhipicephalus* (*Boophilus*) *microplus* strain "Isla" with moderate resistance to organophosphates, pyrethroids and Amidines with an age of 15 to 45 days of hatching.

Six bovines of Aberdeen angus breed were used, three of which were used as a control group and three as an experimental group, infesting with larvae of *Rhipicephalus* (*Boophilus*) *microplus* strain "Isla", until completing a total of 10 to 12 infestations, with an amount of 50 mg. of larvae (approximately 1,850 tick larvae) on Monday, Wednesday and Friday.

The animals subjected to experimentation were placed in specific individual compartments.

The animals were weighed before application of the product (day -1) to determine the dose of application of the treatment.

The animals were fed during the elaboration of the test, providing water and food of good quality *ad libitum.*

Once the presence of engorged females was detected, collections and daily counts of the newly detached specimens were initiated. The number of ticks per count was recorded in record formats. The full and semi-engorged females were collected and taken to the laboratory. 20 specimens per day / bovine were selected, weighed and placed, in 9x1.5cm Petri dishes, previously identified with their collection data, kept in incubators under optimal conditions at 28 ° ± 2 ° C and 80-90% relative humidity for reproductive monitoring. Reproductive monitoring was performed daily during the pre- and post-treatment period.

The animals were grouped according to the number of *Rhipicephalus* (*Boophilus*) *microplus* females released during the days -5 to -1 of the pre-treatment collection. The animals with the highest number of ticks will be group head either in the control group of in the treatment group.

The application of Ixodicide based on Eprinomectin 0.5%, Diflubenzuron 5% and Flumethrin 1% in a pour-on presentation, was performed approximately 25 days post-infestation. The product was administered by dorsal spill from the withers to the tail mass of the animals, at a dose of 1 ml per 10 kg.

After the application of the product based on Eprinomectin 0.5%, Diflubenzuron 5% and Flumethrin 1%, observations and daily collections of dead, detached and viable ticks were made. The full and half-engorged females were weighed. Of these, a significant number of 20 treated and untreated specimens were selected that were housed in special incubators under optimal conditions described above, during a period of 14 days to give way to oviposition. Subsequently, the mass of eggs was removed from each batch, weighed and placed in glass capsules (vials), which were sealed with cotton plugs, staying in incubators under conditions described above, in order to continue their last reproductive phase. 26 days later (time necessary to give rise to the hatching process of the eggs) the vials were removed from the incubator to obtain hatching. After this time, the larvae were sacrificed by heat at 45 ° C.

In order to calculate the percentage of hatching in each of the treated and untreated batches, a homogenization of the contents of each of the glass capsules was carried out with 5 randomly taken samples, carrying out shell and egg counting by aliquot accounts before a visual field of a stereoscopic microscope.

### 3. Data analysis

The statistical analysis was based on the multiple comparison of means which allowed to obtain a wide information on the following biological parameters for this trial:

**To calculate the percentage of effectiveness on the repletion** (% E / R), it was necessary to take into account the number of ticks collected daily during the pre and post-treatment periods, in the two work groups (control and treaties):

$$\% E = 1 - \frac{(A) x (D)}{(B) x (C)} x\ 100$$

Where:

A = Average number of ticks in the control group before treatment.
B = Average number of ticks in the control group per day of counting, after treatment.
C = Average number of ticks of the treatment group before treatment.
D = Average number of ticks of the treatment group per day of counting, after treatment.

**To determine the percentage of inhibition of oviposition** (% I.O.): after 14 days of incubation of the full females, the oviposition was removed from each of them, and the eggs were weighed. To calculate the effect of the products on oviposition, the ratio of number of oviposited eggs / weight of the females per group and lot (OP) was obtained:

$$OP = \frac{(weight\ of\ eggs\ in\ grams) x\ 20,000}{weight\ of\ females\ in\ grams}$$

Once this parameter was obtained, both for treated individuals and for control, we proceeded to calculate:

$$\% I.O. = \frac{\left(\frac{OP}{T} - \frac{OP}{t}\right)}{\frac{OP}{T}} x\ 100$$

Where:

O / PT = Estimated reproduction of the control group.
O / Pt = Estimated reproduction of the treated group.

To determine the **percentage of effectiveness on the reproductive potential** (% IPR), the following equation was applied:

$$\% IPR = 1 - \frac{A \, x \, (\#XL) \, x \, D \, x \, (\# XL)}{B \, x \, (\#XL) \, x \, C \, x \, (\# XL)} \, x \, 100$$

Where:

A, B, C and D are the same data mentioned to calculate the effectiveness on the repletion.
#XL = Average number of viable larvae, which is obtained in the following way: #XL = (Phg) (20,000) (F.C.% hatching) with
Phg = Weight of eggs in grams.

20,000 = Constant, average number of larvae present in one gram.
F.C. % Ecl. = Centesimal fraction of hatching percentage.

These calculations were made per day and globally.

The data obtained allowed to analyze the effect of the treatment under controlled conditions.

4. **Results:**

The results were expressed in terms of the three analyzed parameters mentioned in the Procedure Percentage of Effectiveness on Repletion (% E), Percentage of inhibition of Oviposition (% IO) and Percentage of Reproductive Potential (% IPR).

During the 35 days that the test lasted to determine the efficacy of the idoxicide based on Eprinomectin 0.5%, Diflubenzuron 5% and Flumethrin 1% in a pour-on presentation.

The average number of ticks in the control group was above 300 whereas the treated group started with an average number of 100 ticks. The collection made daily by personnel from this department showed that the decrease in parasitic load was gradual in both groups. However, the treated group showed a decrease up to close to zero engorged ticks from day 3 until the end of the test while in the control group, the decrease in ticks corresponds to a common tendency of this group. This corresponds to a percentage of Effectiveness of the Repletion (% E) of 94.56%.A graphical representation of the results is shown in **Figure 1**.

**Figure 2** shows the kinetics of the weight behavior of ticks collected from the treated and control groups during the 35 days of the challenge.

It can be seen how the treated group is affected by the product from day 3, where a significant decrease in weight (0.22355 g) is observed, with a maximum point of 0.14366 grams on day 19.

The average weight of the ticks is less than 0.150 g, indicating that the egg mass produced is small and did not hatch.

In the control group, the weight of the engorged adult tick is 0.250 to about 0.300 g and the average weight at its maximum point reaches 0.320 g with non-significant gradual decreases in weight during the 35 days of the test.

As can be seen in Figure 3, there is a strong relationship between the average egg weight and the average weight of full females. The values of average weight remained at 0.000 g during the 35 days after treatment in the treated group while in the control group during this same period, the average weight presented values ranging from 0.100 g to 0.190 g.

The product has a complete effect on the hatching of eggs.

The study shows that the product based on Eprinomectin 0.5%, Diflubenzuron 5% and 1% Flumethrin in a pour-on presentation presents an efficacy on repletion of 94.5664%, an efficacy on oviposition of 99.5714 % and an efficacy of 100 % on reproductive potential of female ticks.

**B. Example 2: Field study with an eprinomectin/diflubenzuron/flumethrin pour-on.**

In the study they were employed a total of 30 bovines females and males of breeds Aberdeen- Angus and Charolais , with ages between 12 and 72 months , which presented at the time of selection (day 0) parasitic infestations greater than 30 female ticks *Rhipicephalus* (*Boophilus*) *microplus* per flank. The bovines were randomly assigned to 3 experimental groups (10 cattle / group): group 1 remained without treatment being named as control, the cattle assigned to group 2 were administered the test composition and the individuals assigned to group 3 were administered Acatak® as reference treatment. Both products were administered by dorsal effusion (pour- on) at the single dose of 10mL / 100kg BW.

Following administration of the test composition and Acatak®, each experimental group was located in fields to prevent any physical contact between the groups. Monitoring acaricidal efficacy was conducted in the post treatment at days 08, 15, 22, 29, 36, 43, 50 and 57.

*Rhipicephalus (Boophilus) microplus* count

**Figure 4** shows the average number of ticks counted in the individuals of experimental groups 1, 2 and 3. Previous to the administration of the treatments the average number of ticks *Rhipicephalus (Boophilus) microplus* in the three experimental groups was greater than 50 (p> 0.05, there is no statistically significant difference between tick averages accounted for in experimental group).

On day 08 post treatment, the average number of ticks counted in experimental groups 1 and 3 was 25 and 24.6 ticks / bovine respectively. In the treatment group, the average number of ticks of was 2.9 ticks / bovine (statistically significant difference between mean counted tick group 2 and group means 1 and 3. p <0.05).

At day 15 post-treatment, the average ticks counted in experimental group 1 was 30 / bovine, whereas in the experimental groups 2 and 3 the average tick number per animal was 2.1 and 3.9 respectively (statistical significant difference between the average tick number average of group 1 and the means of groups 2 and 3) .

Due to factors that came out of control of study investigators (parasitic load in free phase, temperature and humidity, etc.), on day 22 post-treatment there was a decrease in the number of ticks counted in the cattle of control group 1. The average number of ticks of the group was 8.9 ticks / bovine in group 1. In groups 2 and 3 the tick / bovine average number was 0.4 and 0.2, respectively.

On days 29 and 36 post treatment the average number of ticks counted in Group 1 was 27.8 and 100.3 respectively, while in the experimental group 2 in the same days of study there were no observed ticks. In group 3 the ticks counted were 0.1 ticks/bovine and 2.7 ticks/bovine.

At day 43 after treatment, in experimental group 1 (Control), 117.7 ticks / bovine were recorded and in experimental groups 2 and 3 the average parasitic load was 16.7 and 15.4 ticks / bovine, respectively.

On day 50 after treatment, the tick average counted was 106 ticks / bovine in group 1; 80.9 ticks / bovine in group 2 and 33.6 ticks / bovine in group 3.

At day 57 post treatment corresponding to the last count of ticks made to experimental group 3, the tick average was 58.6 ticks / bovine.

During days 22, 29, 36 and 43 post-treatment, there was significant statistical difference (p <0.05) between the means of ticks accounted for in the control groups versus groups 2 and 3.

**Effect on the viability of *Rhipicephalus (Boophilus) microplus* (repletion):**

To determine Inhibition of repletion, it is necessary to take into consideration only those viable ticks that were accounted for in the control group (group 1) and in the experimental groups 2 and 3 which were treated with the test composition and the Acatak® reference element.

The comparison between groups 2 and 3 is shown in **Figure 5**.

A marked difference in inhibition of repletion is observed with the test composition compared to Acatak® on day 8 post treatment. Percentage effectiveness of the test composition was 88.88% while the effectiveness of the reference Acatak® was only 8.28%.

Between the days from 22 to 36 after treatment, the percentages of effectiveness for inhibition of repletion was comparable between groups 2 and 3, both products treatments achieving more than 95 % inhibition.

Already on day 43 post treatment, it is observed that there begins to be a decrease on this parameter in both treatment groups (group 2: 86.40% and group 3: 87.80%).

On day 50 post treatment, the test composition achieves 26.85% inhibition of repletion while reference Acatak® achieves 70.45% (lowering to 48.20% effectiveness on day 57 after treatment).

**Effect on the inhibition of oviposition:**

In the parameter inhibiting oviposition, are measured effect on oviposition in those ticks that achieved repletion despite the implementation of the test composition or the reference element Acatak® (Figure 6).

Favorable effects on the oviposition inhibition parameter with the test composition are achieved from day 8 to day 22 after treatment.

Results in the inhibition of the oviposition of 100% were established in the experimental group no. 2 on days 29 and 36 post treatment. From day 43 onward, the effectiveness on this parameter decreases.

With the Acatak® reference element, only 100% inhibition of oviposition is achieved on day 29 after treatment. In the rest of the days evaluated, values higher than 66.97% are not achieved.

**Effectiveness on the Inhibition of Reproductive Potential:**

The percentage of effectiveness of the reproductive potential is the parameter which is calculated from the number of viable larvae of ticks *Rhipicephalus* (*Boophilus*) *microplus* found in each group experimental.

The behavior of the efficacy on the reproductive potential was almost identical in experimental groups 2 and 3 (Figure 7).

The values from day 8 to day 43 after treatment were greater than 90% with both the test composition and Acatak® reference.

On day 50 post-treatment the percentage inhibition of the reproductive potential achieved with the test composition was 82.11% and with the reference Acatak ®79.62%.

**Conclusions:**

Based on the results obtained from the biological evaluation under field conditions, the percentage of efficacy in the inhibition of the reproductive potential against *Rhipicephalus* (*Boophilus*) *microplus ticks* using reference element 593.14 in naturally infested cattle is 82.11% until the day 50 post-treatment.

**C. Example 3: Stable study with an Eprinomectin / diflubenzuron pour-on.**

On day 0, the animals in the Treatment Group (GT) received the product based on 5% Eprinomectin and 5% Diflubenzuron in a pour-on form.

The product was administered in a single dose of 1 ml / 10 kg live weight per animal (corresponding to a concentration of 0.5 mg / kg Eprinomectin and 5 mg / kg of Diflubenzuron), on the dorsal line of bovine (loin) from the cross region until the insertion of the tail, after the removal of the hair and visualization of the animal's skin.

From day D-34 of experimentation, 12 animals were selected, and these were transferred and maintained in individual stalls with slatted wooden pallet. The selected animals were infested with ± 2,500 *Rhipicephalus* (*Boophilus*) *microplus* larvae, aged 14 days old, from a strain maintained for more than six years without contact with acaricides.

On days D-25, D-23, D-21, D-19, D-17, D-15, D-13, D-11, D-9, D-3 and D-1, considering day D0 (zero) as the day of treatment (application of the product) to evaluate the tickicide efficacy in the already installed evolutionary forms.

During the infestation process the animals were contained using halter and had their tails contained for up to two hours, to allow a better fixation of the larvae in the host preventing licking or tail movements. To assess residual efficacy, infestations occurred with ± 10,000 larvae on days D+7, D+14, D+21, D+28, D+35 and D+42 after treatment.

All the detached animals from day D-3 of the test were daily collected from each bay, always in the morning period, later placed in plastic bags duly identified with the corresponding number of each animal and, for later counting.

The counts of the engorged females were recorded on days D-3, D-2 and D-1 and post-treatment daily until effectiveness was less than 80% after at least two consecutive dates of evaluations.

When possible, twenty (20) engorged females belonging to each group were weighed collectively, conditioned in an air-conditioned greenhouse regulated at 27 ± 1 ° C and relative humidity of 70-80% and incubated to perform the postures and analysis of egg viability.

To calculate the **efficacy of the treatment**, the means of the numbers of engorged females recovered from the treated animals were compared with the control animals. To do so, the following formula was used:

$$\% \, of \, efficacy = \left(1 - \left(\frac{Ta \, x \, Ca}{Ca}\right)\right) x \, 100$$

Where:

Ta = mean number of engorged females of treated animals after medication (days +1 to +23);
Tb = mean number of engorged females of treated animals in the 3 days prior to treatment;
Ca = mean number of engorged females recovered from control animals in the post-treatment period (days +1 to +23)
Cb = mean number of engorged females recovered from the control animals in the 3 days prior to the day of treatment.

Determinations of **residual levels of efficacy** were calculated using the mean of detached engorged females in both groups after each reinfestation. Reinfestations were performed on days D+7, D+14, D+21, D+28, D+35 and D+42 and counts performed daily from D+1 to D+45.

The formula used is as follows:

$$\% \ of \ residual \ efficacy = \left( \frac{average \ of \ control \ group - \ average \ of \ treated \ group}{average \ of \ control \ group} \right) x \ 100$$

For the evaluation of the reproductive potential, when possible, a minimum of ten (10) of each group were weighed individually, conditioned (in disposable Petri dishes) and incubated (27°C, 70-80% humidity) for a period of 21 days. After the incubation period, these were discarded and eggs were weighed and placed into identified test tubes, returning to incubation. After three weeks of weighing the eggs, the egg hatching percentage was estimated visually in relation to the number of larvae. The reproduction index (RI) was calculated for each group using the following formula:

$$IR = \left( \frac{average \ weight \ of \ eggs}{average \ weight \ of \ engorged \ females} \right) x \ (\% \ of \ hatched \ eggs) x \ 20.000$$

For the determination of the viability of *Rhipicephalus (Boophilus) microplus* harvested during the stable test, the following formula was used:

$$\% \ of \ inhibition \ of \ reproduction = \left( \frac{IR \ controle - IR treated}{IR control} \right) x \ 100$$

Where IR is the inhibition of reproduction

**Statistical analysis:**

The number of animals used was according to the efficacy tests of tickicide products in stable tests recommended in the regulation of veterinary antiparasitic products.

The data from the engorged females counts of the treated (GT) and control (GC) groups were submitted to statistical analysis for comparison of mean values.

Initially, they were evaluated through the normality test called Shapiro-Wilk. In the case of normal distribution, the statistical method chosen was that of Test T for two independent samples. In the case of data with non-normal distribution, the method employed was Mann Whitney.

The confidence level considered was 95% (a = 0.05). Statistical analyzes were performed by the software program Bioestat 5.0.

**Results**

The animals were infested with *Rhipicephalus (Boophilus) microplus* larvae until day D+42 after treatment.

Detached engorged females count

All the engorged females detached from the animals from day 0-3 of the assay were daily collected until D+45 (except on day D+24 where no loss of engorged females occurs, since the engorged females from the pre-treatment infestations have already been released of the animals), when the efficacy was below 80%.

**Results concerning tickicide effectiveness on the evolutive forms already installed on the animal, corresponding to healing action.**

The mean values of the detached engorged females from the Control Group (GC) were 73.83; 65.50 and 74.67; respectively for days D-3, D-2 and D -1, obtaining an average of these 3 days pre-treatment of 71.33 engorged females. In the Treated Group (WG) the mean values of detached engorged females were 71.50; 74, 17 and 63.83; respectively for days D-3, D-2 and D-1, obtaining an average of these 3 days pretreatment of 69.83 engorged females.

There was no statistically significant difference between the experimental groups for the mean values of the D-3, D-2 and D-1 days prior to treatment (P = 0.9169).

After the treatment, the mean values of the engorged females recovered for the Control Group (GC) were: 54.40 for day D+1; 66.00 for the day D+2; 65, 17 for day D+3; 48.00 for day D+4; 36.83 for the day D+5; 64.33 for day D+6; 50.00 for the day O + 7; 42.67 for day D+8; 42.83 for the day D+9; 43.83 for the day D+10; 36.67 for day D+11; 37.50 for day D+12; 55.67 for day D+13; 61.83 for day D+14; 72.83 for day D+15; 53.17 for day D+16; 44.00 for day D+17; 48.83 for day D+18; 54.33 for the day +19; 55.33 for day D+20; 39.17 for day D+21; 43.50 for day D+22 and 55.67 for day D+23.

The mean drop of control group (GC) for the 23 days (D+1 to D+23) was 50.96.

For the Treated Group, the averages of recovered engorged females were: 17.67 for day D+1; 6.33 for the day D+2; 6, 17 for day D+3; 0.50 for day D+4; 1.17 for day D+5; 0.00 for day D+6; 1.67 for the day O + 7; 0.83 for day D+8; 3.33 for the day D+9; 1.17 for day D+10; 2.67 for day D+11; 3.00 for day D+12; 2.83 for the day D+13; 1.33 for day D+14; 4.33 for the day D+15; 3.17 for day D+16; 2.17 for day D+17; 1.33 for day D+18; 1.50 for day D+19; 1.17 for day D+20; 2.50 for day D+21; 0.67 for day D+22 and 0.67 for day +23.

The mean drop in the treated group of the treated group for the 23 days (D+1 to D+23) after treatment was 2.88. The mean efficacy observed for the Treated Group (GT) was 94.23%, with a minimum variation of 66.89% and a maximum of 100%.

**Evaluation of the residual effect of formulation in test protection against reinfestation: prophylactic effect.**

The mean numbers of engorged females released from animals on days D+25 to D+31, regarding the challenge of day D+7 were: 26.90 for the Control Group (CG) and 8.21 for the Treated Group (GT).

There was a significant difference between the mean value for the two groups (p = 0.0345). The protective efficacy against reinfestation for 7 days after treatment was 69.47%.

The mean numbers of engorged females released from the animals on days D+32 to D+38, concerning the challenge of day D+14 were: 24.24 for the Control Group (GC) and 11.64 for the treated Group (GT). There was no significant difference between the means of the two groups (p = 0.0526). The protective efficacy against reinfestation for 14 days after treatment was 51.96%.

The mean numbers of engorged females released from the animals on days D+39 to D+45, concerning the challenge of day D+21 were: 21.31 for the Control Group (CG) and 10.71 for the Treated Group (GT). There was a significant difference between the means of the two groups (p = 0.0824).

The protective efficacy against reinfestation for 21 days after treatment was: 49.72%.

Considering the results of the prophylactic effect of the tested product, it was observed that there was no maintenance of the tickicide efficacy for the D+7, D+14 and D+21 challenges.

**Reproduction index and viability of engorged females**

For the Control Group (CG), the mean weight of the engorged females observed in the 23-day period was 0.21 g, whereas for the Treated Group (GT) it was 0.15 g.

The mean weight of the postures was 0.11g for the Control Group (GC) and for the Treated Group (GT) 0.06. The mean percentage of hatching eggs in larvae during the 23 days was 84.15% for the Control Group (CG) and 55.5% for the Treated Group (GT).

The above information was used to calculate the percentage of inhibition of reproduction of *Rhipicephalus* (*Boophilus*) *microplus* females in the evaluation of the first 23 days, and the following value was found 49, 1%.

The mean weight of the engorged females was 0.23 g and 0.19 g, respectively, for the control group (GC) and treated group (0 + 25) at 0 + 31 days. The mean weight of the eggs was 0.12g for the Control Group (GC) and 0.07g for the Treated Group (GT). The average hatching percentage of eggs in larvae was 83.93% for the Control Group (CG) and 62.9% for the Treated Group (GT). The information obtained was used to calculate the percentage of inhibition of reproduction of *Rhipicephalus* (*Boophilus*) *microplus* females in the evaluation of days D+25 to D+31 referring to the D+7 challenge.

The mean weight of the engorged females was 0.28 g and 0.20 g, respectively, for the Control Group (GC) and Group Treated (GT). The mean weight of the eggs was 0.11 g for the Control Group (GC) and 0.10 g for the Treated Group (GT). The mean egg hatching percentage in larvae was 88.07% for the Control Group (GC) and 74.4% for the Treated Group (GT). The information obtained was used to calculate the percentage of inhibition of reproduction of *Rhipicephalus* (*Boophilus*) *microplus* females in the evaluation of days D+32 to D+38 referring to the challenge of day D+14.

In the period from D+39 to D+45 days, for the Control Group (GC) and Treated Group (GT), the mean weight of the engorged females, respectively, were: 0.16g and 0.14g, respectively. The mean weight of the eggs was 0.11 g for the Control Group (GC) and 0.07 g for the Treated Group (CG). The mean percentage of eggs hatching in larvae was 83.57% for the Control Group (GC) and 38.40% for the Treated Group (GT). The information obtained was used to calculate the percentage of inhibition of reproduction of *Rhipicephalus* (*Boophilus*) *microplus* females in the evaluation of days D+39 to D+45 for the D+21 challenge.

The results demonstrate that the Eprinomectin and Diflubenzuron formulation, administered by the topical route as a pour-on was effective for the treatment of existing *Rhipicephalus* (*Boophilus*) *microplus* tick infestations. Therefore, the composition containing Eprinomectin and Diflubenzuron has levels of tickicide efficacy above 95% for 23 days.

**Claims**

1. A topical composition comprising eprinomectin and diflubenzuron.

2. The topical composition according to claim 1, wherein the topical composition is a pour-on.

3. The topical composition according to claim 1 or 2, comprising between 0.01 % and 2 %, preferably between 0.1 and 1 %, more preferably about 0.5 %, eprinomectin.

4. The topical composition according to any of claims 1 to 3, comprising between 1 % and 10 %, preferably between 3 and 7 %, more preferably about 5 %, diflubenzuron.

5. The topical composition according to any of claims 1 to 4, comprising at least one further antiparasitic agent selected from the isoxazolines, the macrocyclic lactones, the phenylpyrazoles, the benzimidazoles, the amino-acetonitrile derivatives and the pyrethroids.

6. The topical composition according to any of claims 1 to 5, further comprising a synthetic pyrethroid.

7. The topical composition according to claim 6, wherein the pyrethroid is selected from cypermethrin, deltamethrin, flumethrin and permethrin.

8. The topical composition according to claim 7, wherein the pyrethroid is flumethrin.

9. The topical composition according to any of claims 6 to 8, comprising between 0.01 and 5 %, preferably between 0.5 and 1.5 %, more preferably about 1 % of pyrethroid.

10. A topical composition comprising:

    • between 0.01 % and 2 %, preferably between 0.1 and 1 %, more preferably about 0.5 %, eprinomectin.
    • between 1 % and 10 %, preferably between 3 and 7 %, more preferably about 5 %, diflubenzuron,
    • between 0.01 and 5 %, preferably between 0.5 and 1.5 %, flumethrin.

11. A topical composition according to any of claims 1 to 10, further comprising between 40 and 60 % N-methyl pyrrolidinone, between 10 and 30 % dimethylacetamide, an antioxidant, preferably BHA or BHT and a spreading agent, preferably Propylene Glycol Dicaprylate/Dicaprate.

12. The use of a topical composition according to any of claims 1 to 11 for controlling *Rhipicephalus* (*Boophilus*) *microplus* in an animal.

13. The use according to claim 12, wherein the animal is dairy cattle or beef cattle.

14. The use of a topical composition according to any of claims 1 to 11 for reducing or inhibiting oviposition in female *Rhipicephalus* (*Boophilus*) *microplus,* for reducing or inhibiting reproductive potential of female *Rhipicephalus* (*Boophilus*) *microplus,* for reducing or inhibiting repletion of *Rhipicephalus* (*Boophilus*) *microplus,* or any combination thereof.

15. The use according to claim 12 to 14, wherein the animal is beef cattle and the control of *Rhipicephalus* (*Boophilus*) *microplus* is achieved without withdrawal time or the animal is dairy cattle and the control of *Rhipicephalus* (*Boophilus*) *microplus* is achieved without residues in milk.

FIG. 1

FIG. 2

**FIG. 3**

**FIG. 4**

FIG. 5

FIG. 6

**FIG. 7**

Europäisches
Patentamt

European
Patent Office

Office européen
des brevets

**EUROPEAN SEARCH REPORT**

Application Number

EP 19 18 4532

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 96/25852 A1 (CIBA GEIGY AG [CH]; LOWNDES PHILIP ANTHONY [GB] ET AL.) 29 August 1996 (1996-08-29) | 1-15 | INV. A01N43/90 A01N47/34 A01N53/00 A01P7/02 |
| Y | * claim 1 * * (5); page 10, line 11 * * page 1, paragraph third * | 1-15 | |
| Y | T. NAZIR ET AL: "Efficacy of eprinomectin pour-on against Rhipicephalus (Boophilus) microplus on buffaloes", JOURNAL OF PARASITIC DISEASES, vol. 37, no. 2, 27 July 2012 (2012-07-27), pages 166-167, XP055626993, India ISSN: 0971-7196, DOI: 10.1007/s12639-012-0152-x * abstract * | 1-15 | |
| Y | WO 2012/078605 A1 (MERIAL LTD [US]; HOLMES ROBERT [NZ]) 14 June 2012 (2012-06-14) * Examples; pages 17-28 * | 1-15 | TECHNICAL FIELDS SEARCHED (IPC) A01N |
| Y | S Mekonnen: "Efficacy of flumethrin 1 °/o pour-on against ticks on cattle under field conditions in Ethiopia", Onderstepoort Journal of Veterinary Research, 31 December 2000 (2000-12-31), pages 235-237, XP055627118, Retrieved from the Internet: URL:https://repository.up.ac.za/bitstream/handle/2263/19907/37mekonen2000.pdf?sequence=1&isAllowed=y [retrieved on 2019-09-30] * abstract * | 1-15 | |

-/--

The present search report has been drawn up for all claims

| Place of search | Date of completion of the search | Examiner |
|---|---|---|
| Munich | 30 September 2019 | Davies, Maxwell |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**Europäisches Patentamt**
**European Patent Office**
**Office européen des brevets**

## EUROPEAN SEARCH REPORT

Application Number

EP 19 18 4532

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | RENATO ANDREOTTI: "Diflubenzuron Effectiveness in Cattle Tick(Rhipicephalus Boophilus microplus) Control in Field Conditions", PHARMACEUTICA ANALYTICA ACTA, vol. 06, no. 06, 4 June 2015 (2015-06-04), XP055627001, DOI: 10.4172/2153-2435.1000373 * abstract * | 1-15 | |
| Y | P. Junquera: "CLEAN-UP Pour-on Insecticide with IGR for CATTLE & HORSES - BAYER - permethrin 5% + diflubenzuron 5% - synthetic pyrethroid + benzoylphenyl urea", , 19 December 2017 (2017-12-19), XP055627004, Retrieved from the Internet: URL:https://parasitipedia.net/index.php?option=com_content&view=article&id=2930&Itemid=3283 [retrieved on 2019-09-27] * Last paragraph; page 4 * | 1-15 | |
| Y | WO 2007/093393 A2 (BAYER HEALTHCARE AG [DE]; EMSLIE FORBES RICHARD [NZ]) 23 August 2007 (2007-08-23) * page 2; example 1 * | 1-15 | |

TECHNICAL FIELDS
SEARCHED (IPC)

The present search report has been drawn up for all claims

| Place of search | Date of completion of the search | Examiner |
|---|---|---|
| Munich | 30 September 2019 | Davies, Maxwell |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 18 4532

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2019

| Patent document cited in search report | | Publication date | Patent family member(s) | | Publication date |
|---|---|---|---|---|---|
| WO 9625852 | A1 | 29-08-1996 | AT | 199628 T | 15-03-2001 |
| | | | AU | 695656 B2 | 20-08-1998 |
| | | | BR | 9607262 A | 30-12-1997 |
| | | | CA | 2213612 A1 | 29-08-1996 |
| | | | DE | 69612088 D1 | 19-04-2001 |
| | | | DE | 69612088 T2 | 30-08-2001 |
| | | | DK | 0810823 T3 | 23-07-2001 |
| | | | EP | 0810823 A1 | 10-12-1997 |
| | | | ES | 2158292 T3 | 01-09-2001 |
| | | | FI | 973409 A | 25-08-1997 |
| | | | GR | 3036058 T3 | 28-09-2001 |
| | | | IL | 117226 A | 26-08-2001 |
| | | | JP | 3980638 B2 | 26-09-2007 |
| | | | JP | H11500439 A | 12-01-1999 |
| | | | KR | 19980702440 A | 15-07-1998 |
| | | | NZ | 302661 A | 28-10-1999 |
| | | | PT | 810823 E | 28-09-2001 |
| | | | US | 5994395 A | 30-11-1999 |
| | | | US | 6201012 B1 | 13-03-2001 |
| | | | WO | 9625852 A1 | 29-08-1996 |
| | | | ZA | 9601467 B | 11-09-1996 |
| WO 2012078605 | A1 | 14-06-2012 | AU | 2011338573 A1 | 11-07-2013 |
| | | | NZ | 612185 A | 30-10-2015 |
| | | | NZ | 627856 A | 31-03-2016 |
| | | | WO | 2012078605 A1 | 14-06-2012 |
| WO 2007093393 | A2 | 23-08-2007 | AR | 059519 A1 | 09-04-2008 |
| | | | AU | 2007214652 A1 | 23-08-2007 |
| | | | BR | PI0707846 A2 | 10-05-2011 |
| | | | CN | 101621930 A | 06-01-2010 |
| | | | NZ | 570512 A | 28-10-2011 |
| | | | UY | 30168 A1 | 28-09-2007 |
| | | | WO | 2007093393 A2 | 23-08-2007 |
| | | | ZA | 200807935 B | 25-11-2009 |

EPO FORM P0459

For more details about this annex : see Official Journal of the European Patent Office, No. 12/82